# EUROPÄISCHE PATENTSCHRIFT

(11) **EP 3 980 599 B1**
(45) Veröffentlichungstag und Bekanntmachung des Hinweises auf die Patenterteilung: **28.06.2023**
(21) Anmeldenummer: 20732118.3
(22) Anmeldetag: 25.05.2020
(51) Int. Cl.: D21F 1/00, B29C 53/12

(54) **VERFAHREN UND VORRICHTUNG ZUM HERSTELLEN VON SCHRAUBENWENDELN**
METHOD AND DEVICE FOR PRODUCING HELICAL COILS
PROCÉDÉ ET DISPOSITIF POUR LA FABRICATION DE FILAMENTS HÉLICOÏDAUX

(30) Priorität: 07.06.2019 DE 102019115591
(43) Veröffentlichungstag der Anmeldung: 13.04.2022
(73) Patentinhaber: Leo Feinwerktechnik GmbH & Co. KG, 63128 Dietzenbach (DE)
(72) Erfinder: LANGELLOTI, Franco, 63179 Obertshausen (DE); LEO, Martin, 63128 Dietzenbach (DE); BACHMANN, Wolfgang, 64823 Groß-Umstadt (DE); NUSS, Lothar, 63150 Heusenstamm (DE)
(74) Vertreter: Habermann Intellectual Property Partnerschaft von Patentanwälten mbB
(86) Internationale Anmeldenummer: PCT/EP2020/064462
(87) Internationale Veröffentlichungsnummer: WO 2020/244955

(56) Entgegenhaltungen:
- DE-A1- 2 010 268
- DE-U1-202008 005 836

## Beschreibung

Die Erfindung betrifft ein Verfahren zum Herstellen von Schraubenwendeln, insbesondere für Wendelsiebe, wobei ein Filament in einer Filamentförderrichtung durch einen ersten Kanalabschnitt eines ersten Rotationskörpers gefördert wird, wobei der erste Rotationskörper um einen ersten Abschnitt eines drehfest gelagerten Kernelements rotiert, wobei das Filament in der Filamentförderrichtung nachfolgend durch einen zweiten Kanalabschnitt eines zweiten Rotationskörpers gefördert wird, der um einen dem ersten Abschnitt nachfolgenden zweiten Abschnitt des Kernelements gleichlaufend mit dem ersten Rotationskörper rotiert, und wobei das Filament anschließend um einen nach dem zweiten Abschnitt in der Filamentförderrichtung aus dem Kernelement herausragenden Wickeldorn gewunden wird, sodass durch einen kontinuierlichen Vorschub der um den Wickeldorn gewundenen Windungen des Filaments ein Schraubenwendel aus dem Filament hergestellt werden kann.

Aus mehreren nebeneinander angeordneten und miteinander verbundenen Schraubenwendeln können beispielsweise Wendelsiebe hergestellt werden, die in der Praxis als Bespannungen oder Trockensiebe in Papiermaschinen verwendet werden. Flächige Verbunde aus mehreren Schraubenwendeln eignen sich auch als Transportbänder oder als Filtereinrichtungen. Die einzelnen Schraubenwendel können aus Metall hergestellt werden. Für viele Anwendungsbereiche weisen Schraubenwendel aus Kunststoff vorteilhafte Eigenschaften auf. Die Schraubenwendel werden üblicherweise ausgehend von einem Draht bzw. Filament hergestellt, welches von einer Vorratsrolle durch eine Wendelvorrichtung mit einem rotierenden Führungselement für das Filament gefördert und anschließend um einen Wickeldorn gewunden wird. Mit jeder neuen Windung des Filaments, die von dem rotierenden Führungselement auf den Wickeldorn aufgewunden wird, werden die davor gewundenen Windungen verdrängt und der dadurch entstehende Schraubenwendel von dem Wickeldorn geschoben.

Ein solches Verfahren sowie verschiedene Varianten von Vorrichtungen, mit welchen diese Verfahren durchgeführt werden können, sind beispielsweise in DE 1 140 698, in CH 421 484 oder in DE 1 956 321 beschrieben.

Bei der Herstellung von Schraubenwendeln aus einem Kunststoffdraht bzw. Kunststofffilament ist es vorteilhaft, wenn das Filament bei dem Aufwickeln auf den Wickeldorn erwärmt ist, damit das gewundene Filament die durch das Aufwickeln vorgegebene Formgebung auch nach einem Ablösen von dem Wickeldorn möglichst dauerhaft beibehält. In DE 2 010 268 ist eine Vorrichtung beschrieben, bei welcher der Wickeldorn beheizt ist und dadurch die kurzzeitige Erwärmung des auf den Wickeldorn gewundenen Filaments bewirkt werden kann, was in dieser Druckschrift auch als Thermofixierung bezeichnet wird. Aus der Praxis sind auch Vorrichtungen bekannt, bei denen das Filament kurz nach dem Abwickeln von der Vorratsrolle erwärmt wird und in dem erwärmten Zustand durch einen oder mehrere Kanalabschnitte gefördert wird, um anschließend auf den Wickeldorn aufgewunden zu werden.

Es ist für viele Verwendungsbereiche eines Schraubenwendels vorteilhaft, wenn das schraubenförmig gewundene Filament keine kreisförmige Querschnittsfläche aufweist, sondern eine elliptische oder näherungsweise rechteckförmige Querschnittsfläche. Da die üblicherweise für die Herstellung von Schraubenwendeln verwendeten Filamente zunächst eine kreisrunde Querschnittsfläche aufweisen ist es dann erforderlich, das Filament nach dem Abwickeln von der Vorratsrolle und vor dem Aufwickeln auf den Wickeldorn zu verformen. Dies kann beispielsweise dadurch erfolgen, dass das Filament zwischen drehbar gelagerten Walzen hindurchgeführt wird, wobei der Abstand der Walzen geringer als ein ursprünglicher Durchmesser des Filaments ist und dadurch das Filament zu einer abgeflachten Querschnittsfläche verformt wird. In DE 20 2008 005 836 U1 wird eine Verformung des Filaments unmittelbar vor dem Eintritt in den ersten Kanalabschnitt beschrieben.

Auch bei dieser Verformung der Querschnittsfläche des Filaments ist es vorteilhaft, wenn das Filament während der Verformung erwärmt ist. Aus der Praxis ist es bekannt, dass das Filament nach dem Abwickeln von der Vorratsrolle erwärmt und unmittelbar danach auch verformt wird. Allerdings hat sich gezeigt, dass die nach der Verformung nicht mehr rotationssymmetrische Querschnittsfläche des Filaments für die nachfolgende Beförderung durch die rotierenden Komponenten bis hin zum Aufwickeln auf den Wickeldorn nachteilig ist, da das flache Filament während des Rotierens außerhalb oder auch innerhalb der Kanalabschnitte verkippen oder in den Führungselementen verkanten kann.

Es wird deshalb als eine Aufgabe der vorliegenden Erfindung angesehen, ein eingangs beschriebenes Verfahren so auszugestalten, dass eine möglichst schnelle und zuverlässige Herstellung eines Schraubenwendels aus einem Filament ermöglicht wird.

Diese Aufgabe wird erfindungsgemäß dadurch gelöst, dass ein erwärmtes Heizfluid mit Überdruck durch den ersten Kanalabschnitt sowie den nachfolgend angeordneten zweiten Kanalabschnitt strömt und dabei das durch den ersten Kanalabschnitt und anschließend durch den zweiten Kanalabschnitt geförderte Filament erwärmt. Die Erwärmung des Filaments ist dadurch nicht auf einen Förderabschnitt vor oder nach den rotierenden Kanalabschnitten beschränkt, sondern erfolgt während der Beförderung des Filaments durch die rotierenden Kanalabschnitte. Dadurch kann eine wesentlich effizientere und für das Filament schonendere Erwärmung bewirkt werden und gleichzeitig eine vergleichsweise hohe Erwärmung des Filaments bei dem Aufwickeln auf den Wickeldorn erreicht werden.

Filamente sind aus dem Stand der Technik bekannt und umfassen alle linearen flexiblen Gebilde, die im Verhältnis zu ihrer Länge eine sehr geringe Querschnittsfläche aufweisen. Unter anderem kann es sich bei einem Filament um ein Monofilament oder einen Draht aus Kunststoff handeln, die einfädig ausgebildet sind und beispielsweise mit einem Extrusionsschmelzspinnverfahren aus Einlochdüsen hergestellt werden können. Ein Durchmesser eines Filaments kann zwischen einigen Nanometern und einigen Millimetern betragen, wobei je nach Anwendung und Material des Filaments auch größere Durchmesser denkbar sind. Ein Filament kann aus unterschiedlichen Materialien oder aus Materialkombinationen bestehen, wobei für viele Anwendungen ein Kunststoff oder ein Metall ein geeignetes Material sein kann.

Bei dem erwärmten Heizfluid kann es sich um geeignete Flüssigkeiten oder Gase handeln. Es hat sich gezeigt, dass sich vorab erwärmte Heißluft in vorteilhafter Weise dafür eignet, gemeinsam mit dem Filament durch die Kanalabschnitte befördert zu werden und dabei das Filament zu erwärmen. Bei einem üblicherweise länger andauernden Betrieb werden durch das erwärmte Heizfluid auch die Kanalabschnitte und umgebende Wandungsbereiche erwärmt, wodurch die angestrebte Erwärmung des Filaments zusätzlich unterstützt wird.

Gemäß einer besonders vorteilhaften Ausgestaltung des Erfindungsgedankens ist vorgesehen, dass das aus dem zweiten Kanalabschnitt austretende Filament vor dem Umwickeln auf den Wickeldorn mit einer Verformungseinrichtung verformt wird. Die Verformung erfolgt demzufolge nicht bereits vor oder während der Beförderung des Filaments durch die Kanalabschnitte der rotierenden Rotationskörper, sondern erst danach. Die Verformung des Filaments in die für das Schraubenwendel vorgesehene Querschnittsfläche erfolgt nach einer vergleichsweise langen Erwärmdauer des Filaments unmittelbar vor dem Aufwickeln auf den Wickeldorn. Eine aus der Praxis gelegentlich bekannte doppelte Erwärmung des Filaments, um zunächst den Filamentquerschnitt zu verformen, bevor das Filament durch die Kanalabschnitte befördert wird, und anschließend erneut um das Aufwickeln auf den Wickeldorn zu unterstützen, ist nicht erforderlich.

Im Hinblick auf ein möglichst störungsfreies und schnelles Aufwickeln des Filaments auf den Wickeldorn ist es gemäß einer Ausgestaltung des Erfindungsgedankens vorteilhaft, dass das Filament mit einer rotationssymmetrischen Querschnittsfläche dem ersten Kanalabschnitt zugeführt wird, und dass das Filament in der Verformungseinrichtung zu einer nicht rotationssymmetrischen Querschnittsfläche verformt wird.

Um das erwärmte Heizfluid in bzw. durch die Kanalabschnitte zu befördern ist optional vorgesehen, dass das Filament vor dem ersten Kanalabschnitt durch eine drehfest angeordnete Zuführungskammer gefördert und dem ersten Kanalabschnitt zugeführt wird, und dass ebenfalls das erwärmte Heizfluid über die Zuführungskammer dem ersten Kanalabschnitt zugeführt wird. Die drehfest angeordnete Zuführungskammer kann dazu verwendet werden, in einfacher Weise eine Verbindung mit einem extern angeordneten Vorratsbehälter für das Heizfluid herzustellen. Das Heizfluid kann wahlweise innerhalb oder außerhalb der Zuführungskammer in geeigneter Weise konditioniert bzw. auf die gewünschte Temperatur gebracht und mit einem Überdruck beaufschlagt werden, um bei dem anschließenden Durchströmen durch die Kanalabschnitte die angestrebte Erwärmung des Filaments in den Kanalabschnitten zu bewirken.

Um in vorteilhafter Weise das erwärmte Heizfluid nach dem Durchströmen der beiden Kanalabschnitte auch gezielt für die Verwendung bei der Verformung der Querschnittsfläche des Filaments nutzen zu können ist optional vorgesehen, dass das erwärmte Heizfluid nach dem Ausströmen aus dem zweiten Kanalabschnitt durch die Verformungseinrichtung hindurchströmt.

Um zu begünstigen, dass das während der Beförderung durch die Kanalabschnitte erwärmte Filament seine durch das Aufwickeln auf den Wickeldorn erzwungene Verformung beibehält und dadurch die Formgebung des Schraubenwendels stabilisiert wird, ist gemäß einer erfindungsgemäßen Ausgestaltung vorgesehen, dass das aus dem zweiten Kanalabschnitt ausströmende erwärmte Heizfluid auf den Wickeldorn gerichtet wird. Der Wickeldorn wird dadurch in vorteilhafter Weise zusätzlich erwärmt.

Die Erfindung betrifft auch eine Vorrichtung zum Herstellen von Schraubenwendeln, insbesondere für Wendelsiebe, mit einem drehfest gelagerten Kernelement, mit einem ersten Rotationskörper, der um einen sich in einer Filamentförderrichtung entlang des Kernelements erstreckenden ersten Abschnitt des Kernelements rotierend gelagert ist, und mit einem zweiten Rotationskörper, der um einen sich in der Filamentförderrichtung entlang des Kernelements erstreckenden und dem ersten Abschnitt nachfolgenden zweiten Abschnitt des Kernelements rotierend gelagert ist, und mit einem nach dem zweiten Abschnitt in der Filamentförderrichtung aus dem Kernelement herausragenden Wickeldorn, wobei ein Filament in der Filamentförderrichtung durch einen ersten Kanalabschnitt in dem rotierenden ersten Rotationskörper und nachfolgend durch einen zweiten Kanalabschnitt in dem gleichlaufend rotierenden zweiten Rotationskörper hindurchgeführt und anschließend um den Wickeldorn gewunden wird, sodass durch einen kontinuierlichen Vorschub der um den Wickeldorn gewundenen Windungen des Filaments ein Schraubenwendel aus dem Filament hergestellt werden kann.

Aus dem Stand der Technik bekannte Vorrichtungen sind beispielsweise in DE 10 2010 056 254 A1 oder in beschrieben. Durch die in DE 20 2008 005 836 U1 beschriebene Anordnung von zwei Rotationskörpern auf einem gemeinsamen Kernelement, wobei die Rotationsachsen der beiden Rotationskörper einen seitlichen Versatz zueinander aufweisen, kann erreicht werden, dass das Filament durch die rotierenden Kanalabschnitte hindurch befördert und auf einen feststehenden und über die rotierenden Kanalabschnitte hinausragenden Wickeldorn aufgewickelt werden kann, von welchem die aufgewickelten Windungen anschließend ohne eine weitere Verformung der Windungen abgezogen oder weggeschoben werden können.

Die frühzeitige Verformung des Filaments vor dem Eintritt in den ersten Kanalabschnitt wird als nachteilig empfunden. Eine Erwärmung des Filaments, um das Aufwickeln auf den Wickeldorn zu unterstützen, kann nur über eine in Förderrichtung vorausgehend angeordnete Heizeinrichtung erfolgen.

Es wird deshalb als eine weitere Aufgabe der vorliegenden Erfindung angesehen, eine derartige Vorrichtung zum Herstellen von Schraubenwendeln so weiterzuentwickeln, dass eine vorteilhafte Erwärmung des Filaments vor dessen Aufwickeln auf den Wickeldorn ermöglicht wird.

Diese Aufgabe wird erfindungsgemäß dadurch gelöst, dass in der Filamentförderrichtung vor dem ersten Rotationskörper eine drehfest gelagerte Zuführungskammer angeordnet ist, durch welche das von einem Vorrat zugeführte Filament in den ersten Kanalabschnitt eingeführt werden kann, wobei die Zuführungskammer mit einem Heizfluidvorrat verbunden ist, sodass ein erwärmtes Heizfluid mit Überdruck der Zuführungskammer zugeführt werden und anschließend durch den ersten Kanalabschnitt sowie den nachfolgend angeordneten zweiten Kanalabschnitt strömen kann. Die Zuführungskammer ist drehfest angeordnet und kann in einfacher Weise über Verbindungsleitungen mit einem Heizfluidvorrat verbunden werden. Die Erwärmung des Heizfluids kann entweder innerhalb der Zuführungskammer oder aber vorzugsweise außerhalb erfolgen, sodass das in die Zuführungskammer hineinströmende Heizfluid bereits erwärmt ist. Die Zuführungskammer kann einen ringförmigen Austrittsspalt aufweisen, der derart angeordnet und ausgebildet ist, dass sich ein Eingang des ersten Kanalabschnitts des ersten Rotationskörpers während des Betriebs entlang des ringförmigen Austrittsspalts bewegt und das mit einem Überdruck beaufschlagte Heizfluid kontinuierlich in den ersten Kanalabschnitt hineingedrückt wird. Um die Vorrichtung möglichst raumsparend und mit einem geringen Gewicht auszugestalten ist es vorteilhaft, wenn die Erwärmung und die Druckbeaufschlagung des Heizfluids mit externen Komponenten außerhalb der Zuführungskammer durchgeführt wird.

Einer besonders vorteilhaften Ausgestaltung des Erfindungsgedankens zufolge ist vorgesehen, dass in der Filamentförderrichtung im Anschluss an einen Ausgang des zweiten Kanalabschnitts eine Verformungseinrichtung an dem zweiten Rotationskörper angeordnet ist, mit welcher das an dem Ausgang des zweiten Kanalabschnitts austretende und erwärmte Filament vor dem Umwinden auf den Wickeldorn verformt werden kann. Die Verformung des Filaments erfolgt demzufolge unmittelbar vor dem Aufwickeln des dann bereits verformten Filaments auf den Wickeldorn. Das Filament kann zunächst mit einer rotationssymmetrischen Formgebung, bzw. mit einer kreisrunden Querschnittsfläche dem ersten Kanalabschnitt zugeführt und durch den rotierenden ersten und zweiten Kanalabschnitt gefördert werden, wodurch vermieden wird, dass das Filament während der Rotationsbewegung verkippt oder während der Beförderung durch die Kanalabschnitte verkanten kann. Auf diese Weise lassen sich deutlich höhere Drehzahlen für die Rotationsbewegung des Filaments erreichen und eine entsprechend höhere Herstellungsgeschwindigkeit für den Schraubenwendel ermöglichen.

Zudem kann auf Grund der Anordnung der Verformungseinrichtung im Anschluss an den Ausgang des zweiten Kanalabschnitts die gesamte Förderlänge des Filaments durch den ersten und zweiten Kanalabschnitt zum Erwärmen des Filaments vor der anschließenden Verformung mit der Verformungseinrichtung genutzt werden. Dadurch wird eine besonders schonende und gleichmäßige Erwärmung des Filaments ermöglicht, was sich wiederum vorteilhaft auf die Herstellungsgeschwindigkeit und auf die mechanische Stabilität des so hergestellten Schraubenwendels auswirkt.

Um die Heizleistung des durch die beiden Kanalabschnitte strömenden Heizfluids auch für die Verformungseinrichtung nutzen zu können ist optional vorgesehen, dass die Verformungseinrichtung eine dem Ausgang des zweiten Kanalabschnitts zugewandte Einströmungsöffnung für das erwärmte Heizfluid aufweist, und dass die Verformungseinrichtung eine Ausströmungsöffnung für das erwärmte Heizfluid aufweist. Das erwärmte Heizfluid kann auf diese Weise auch die Verformungseinrichtung durchströmen und dabei sowohl das durch die Verformungseinrichtung beförderte Filament als auch die umgebenden Komponenten der Verformungseinrichtung erwärmen.

Um das erwärmte Heizfluid zusätzlich für eine vorteilhafte Erwärmung des Filaments während des Aufwickelns auf den Wickeldorn nutzen zu können ist gemäß einer Ausgestaltung des Erfindungsgedankens vorgesehen, dass die Ausströmungsöffnung der Verformungseinrichtung auf den Wickeldorn gerichtet ist. Das aus der Verformungseinrichtung ausströmende Heizfluid erwärmt dadurch sowohl den Wickeldorn als auch das auf den Wickeldorn aufgewickelte Filament. Die mit dem Heizfluid transportierte Wärmeenergie wird dadurch sehr effizient für die Erwärmung vieler Komponenten der Vorrichtung entlang der Filamentförderrichtung genutzt.

Einer vorteilhaften Ausgestaltung des Erfindungsgedankens zufolge ist vorgesehen, dass das Kernelement in dem ersten Abschnitt eine erste Welle aufweist, um welchen der erste Rotationskörper rotierend gelagert ist, dass das Kernelement in dem zweiten Abschnitt eine zweite Welle aufweist, um welche der zweite Rotationskörper rotierend gelagert ist, und dass die erste Welle über eine Verbindungseinrichtung mit der zweiten Welle so verbunden ist, dass eine Mittenachse der ersten Welle einen seitlichen Versatz relativ zu einer Mittenachse der zweiten Welle aufweist. Die beiden Rotationskörper können während des Betriebs der Vorrichtung von außen angetrieben und in Rotation versetzt werden. Das innenliegend angeordnete Kernelement kann sich auf Grund der versetzten Mittenachsen der beiden Wellen, auf denen jeweils der zugeordnete Rotationskörper rotierend gelagert ist, nicht mitdrehen. Dadurch kann eine drehfeste bzw. ortsfeste Anordnung des Kernelements erreicht werden, ohne dass eine starre Verbindung des Kernelements mit der Umgebung erforderlich ist. Das um das Kernelement rotierende Filament kann dann in besonders einfacher Weise entlang des Kernelements um das Kernelement herumgeführt und befördert werden. Der Wickeldorn kann an dem feststehenden Kernelement festgelegt und in der Filamentförderrichtung vorspringend ausgestaltet sein.

Um einen unerwünschten Verlust an Wärmeenergie und von dem erwärmten Heizfluid zu verringern ist einem Aspekt der Erfindung zufolge vorgesehen, dass ein Abstand eines Ausgangs des ersten Kanalabschnitts des ersten Rotationskörpers zu einem Eingang des zweiten Kanalabschnitts des zweiten Rotationskörpers weniger als 1 mm, vorzugsweise weniger als 0,5 mm und besonders vorzugsweise weniger als 0,2 mm beträgt. Die beiden Rotationskörper rotieren jeweils um seitlich zueinander versetzt angeordnete Rotationsachsen, die den seitlich versetzten Mittenachsen der beiden Wellen entsprechen, an denen die beiden Rotationskörper gelagert sind. Eine starre Kopplung oder eine durchgehende Verbindung entlang des Umfangs der beiden Rotationskörper ist deshalb nicht ohne weiteres möglich. Indem eine Spaltbreite eines Spalts zwischen den beiden Rotationskörpern so gering wie möglich vorgegeben wird kann erreicht werden, dass das durch den ersten Kanalabschnitt strömende Heizfluid im Wesentlichen vollständig in den nach dem Spalt anschließenden zweiten Kanalabschnitt überführt wird, bzw. dort hineinströmt, und dass ein unerwünschtes seitliches Ausströmen des Heizfluids durch den zwischen den beiden Rotationskörpern gebildeten Spalt weitgehend verhindert wird. Eine dem ersten Kanalabschnitt zugewandte Eingangsöffnung des zweiten Kanalabschnitts kann zweckmäßigerweise einen größeren Durchmesser aufweisen und der zweite Kanalabschnitt sich anschließend auf den vorgegebenen Kanaldurchmesser verjüngen, sodass das aus dem ersten Kanalabschnitt austretende Filament alleine durch einen Vorschub des Filaments in den ersten Kanalabschnitt hinein in den angrenzenden zweiten Kanalabschnitt eingefädelt werden kann, ohne dass eine gesonderte Unterstützung oder Zwangsführung an dem Eingang des zweiten Kanalabschnitts erforderlich wird.

Es ist nicht erforderlich, dass beide Rotationskörper mit jeweils zugeordneten Antriebseinrichtungen oder Antriebskomponenten unabhängig voneinander zu der jeweiligen Rotationsbewegung angetrieben werden. Es hat sich gezeigt, dass insbesondere bei hohen Drehzahlen eine notwendigerweise synchrone Rotationsbewegung der beiden Rotationskörper mit einem erheblichen Steuerungsaufwand verbunden ist und die jeweiligen Antriebseinrichtungen sehr präzise ausgestaltet und aufwendig gesteuert werden müssen. Gemäß einer vorteilhaften Ausgestaltung des Erfindungsgedankens ist deshalb vorgesehen, dass der rotierend gelagerte erste Rotationskörper und der rotierend gelagerte zweite Rotationskörper über eine Magnetkopplung berührungsfrei miteinander gekoppelt sind. Gerade in Verbindung mit einer möglichst geringen Spaltbreite zwischen dem ersten und dem zweiten Rotationskörper kann eine Magnetkopplung realisiert werden, die den nicht gesondert angetriebenen Rotationskörper an den angetriebenen Rotationskörper koppeln und dessen Rotationsbewegung auf den nicht angetriebenen Rotationskörper übertragen. Ein Auseinanderdriften der Rotationsbewegung der beiden Rotationskörper wird dadurch in einfacher Weise vermieden.

Nachfolgend wird ein exemplarisches Ausführungsbeispiel des Erfindungsgedankens in verschiedenen Darstellungen gezeigt und näher erläutert. Es zeigt:
Figur 1 eine schematische Darstellung einer erfindungsgemäßen Vorrichtung zum Herstellen eines Schraubenwendels,
Figur 2 eine Schnittansicht einer Zuführungskammer, durch welche sowohl ein Filament als auch ein Heizfluid einem in Filamentförderrichtung nachfolgend angeordneten Rotationskörper mit einem ersten Kanalabschnitt zugeführt wird,
Figur 3 eine Schnittansicht einer Verformungseinrichtung, mit welcher das aus einem zweiten Rotationskörper austretende Filament verformt wird, bevor das verformte Filament auf einen Wickeldorn aufgewickelt wird, und
Figur 4 eine schematische Schnittansicht einer exemplarischen Ausführungsform der erfindungsgemäßen Vorrichtung.

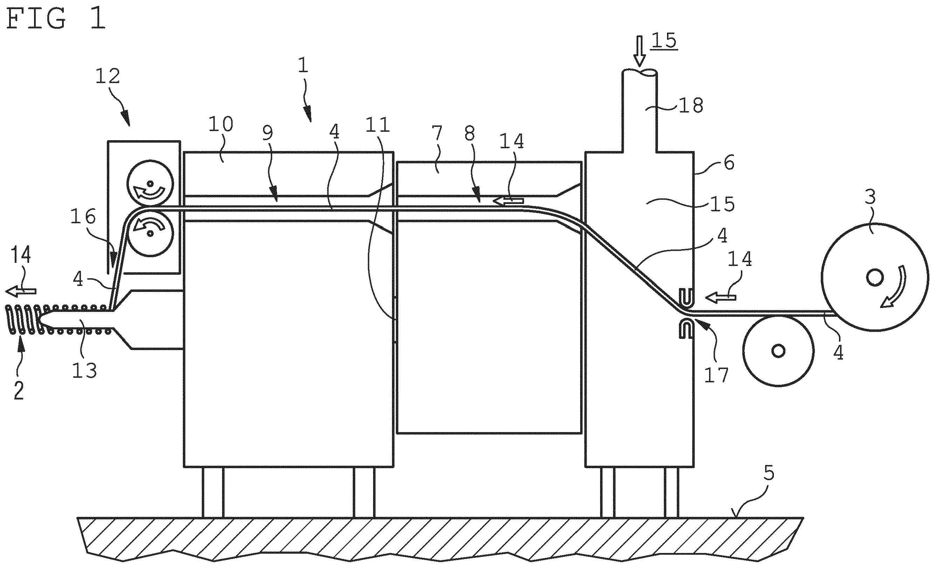

In den Figuren 1 bis 4 sind verschiedene Ansichten einer Vorrichtung 1 zum Herstellen eines Schraubenwendels 2 aus einem der Vorrichtung 1 von einer Vorratsrolle 3 zugeführten Filament 4 gezeigt. Das Filament 4 wird durch eine drehfest mit einer Basis 5 oder auf einem Untergrund festgelegten Zuführungskammer 6 einem ersten Rotationskörper 7 zugeführt, in welchem ein erster Kanalabschnitt 8 ausgebildet ist, durch welchen das Filament 4 hindurchbefördert wird. Das Filament 4 wird nachfolgend durch einen zweiten Kanalabschnitt 9 hindurch befördert, der in einem zweiten Rotationskörper 10 ausgebildet ist. Der erste Rotationskörper 7 und der zweite Rotationskörper 10 sind rotierend auf einem in Figur 1 nur angedeuteten Kernelement 11 angeordnet, welches seinerseits drehfest in den beiden Rotationskörpern 7, 10 gelagert ist.

An einem dem ersten Rotationskörper 7 abgewandten Ende des zweiten Rotationskörpers 10 ist eine Verformungseinrichtung 12 befestigt, mit welcher eine Querschnittsfläche des durch die Verformungseinrichtung 12 hindurch beförderten Filaments 4 von einer zunächst noch rotationssymmetrischen, bzw. kreisförmigen Querschnittsfläche in ein elliptische, bzw. näherungsweise rechteckförmige Querschnittsfläche verformt wird.

Anschließend wird das verformte Filament 4 von dem rotierenden zweiten Rotationskörper auf einen drehfest angeordneten Wickeldorn 13 aufgewickelt, der an dem Kernelement 11 festgelegt ist und in einer durch Pfeile 14 angedeuteten Filamentförderrichtung über das Kernelement 11 hinausragt. Durch das Aufwickeln einer neuen Windung auf den Wickeldorn 13 werden bereits aufgewickelte Windungen verdrängt und der derart hergestellte Schraubenwendel 2 in Filamenförderrichtung weitergeschoben und von dem Wickeldorn 13 weggeschoben.

Von einem in den Figuren nicht dargestellten Heizfluidvorratsbehälter wird ein erwärmtes und mit einem Überdruck beaufschlagtes Heizfluid 15 der Zuführungskammer 6 zugeführt. Aus der Zuführungskammer 6 strömt das mit Überdruck beaufschlagte erwärmte Heizfluid in den ersten Kanalabschnitt 8 und anschließend durch den ersten Kanalabschnitt 8 und den daran angrenzend verlaufenden zweiten Kanalabschnitt 9 bis in die Verformungseinrichtung 12 hinein. Von der Verformungseinrichtung 12 wird das durch eine Austrittsöffnung 16 austretende Heizfluid auf den Wickeldorn 13 gerichtet und erwärmt bei dem Ausströmen aus der Verformungseinrichtung 12 auch den Wickeldorn 13 und das darauf aufgewickelte Filament 4.

Durch das erwärmte Heizfluid 15 wird das Filament 4 beginnend mit der Zuführungskammer 6 während der Beförderung durch den ersten Kanalabschnitt 8 und durch den zweiten Kanalabschnitt 9 sowie während der Verformung in der Verformungseinrichtung 12 und bei dem Aufwickeln auf den Wickeldorn 13 erwärmt. Dadurch wird eine schonende und gleichmäßige Erwärmung des Filaments 4 bewirkt, was sich vorteilhaft auf die Verformung des Filaments 4 in der Verformungseinrichtung 12 und bei dem Aufwickeln auf den Wickeldorn 13 auswirkt und dazu führt, dass der derart hergestellte Schraubenwendel 2 eine stabile und mechanisch belastbare Formgebung aufweist.

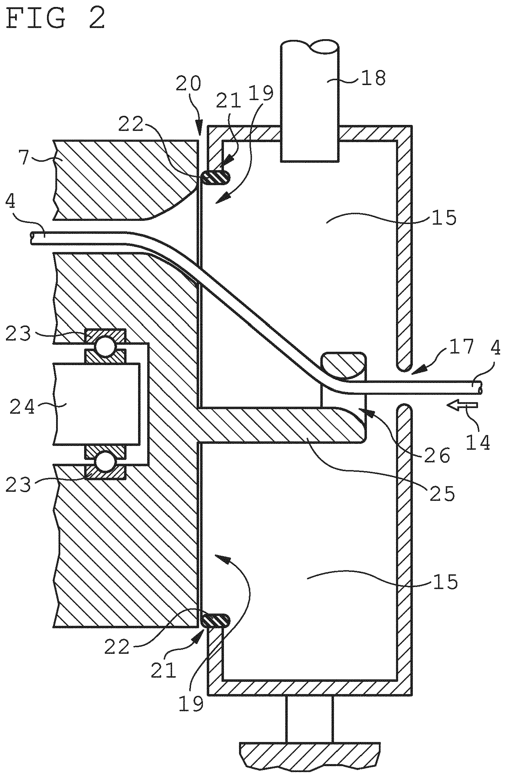

Die in Figur 2 vergrößert dargestellte Zuführungskammer 6 weist eine Eintrittsöffnung 17 für das von der Vorratsrolle 3 zugeführte Filament 4 auf. Über eine seitlich angeordnete Verbindungsleitung 18 wird das vorab erwärmte und mit einem Überdruck beaufschlagte Heizfluid 15 zugeführt. Für viele Anwendungsbereiche und Filamentmaterialien ist Heißluft ein geeignetes Heizfluid 15. Auf einer dem ersten Rotationskörper 7 zugewandten Seite weist die Zuführungskammer 6 eine kreisförmige Austrittsöffnung 19 auf. Der erste Rotationskörper 7 ist lediglich durch einen geringen Spalt 20 von der kreisförmigen Austrittsöffnung 19 der Zuführungskammer 6 beabstandet. Ein Öffnungsrand 21 der Austrittsöffnung 19 weist Dichtungselemente 22 auf, welche einen Übergang der Austrittsöffnung 19 zu dem in dem ersten Rotationskörper 7 ausgebildeten ersten Kanalabschnitt 8 gegenüber dem umgebenden Spalt 20 abdichten.

Der erste Rotationskörper 7 ist mit Hilfe eines Kugellagers 23 drehbar auf einer ersten Welle 24 des drehfest angeordneten Kernelements 11 gelagert. An dem ersten Rotationskörper 7 ist ein durch die Austrittsöffnung 19 in die Zuführungskammer 6 hineinragender Führungsarm 25 mit einer Führungsöse 26 angeordnet, der während der Rotationsbewegung des ersten Rotationskörpers 7 eine zusätzliche Führung für das in dem ersten Kanalabschnitt rotierend mitgeführte Filament 4 bewirkt.

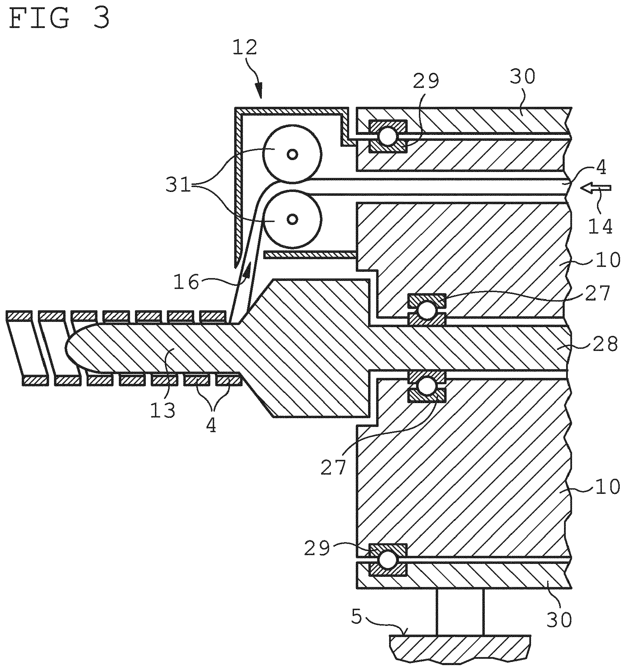

In Figur 3 ist ein Teilbereich der erfindungsgemäßen Vorrichtung 1 um den Wickeldorn 13 vergrößert dargestellt. Der zweite Rotationskörper 10 ist mit Hilfe von Kugellagern 27 drehbar auf einer zweiten Welle 28 des Kernelements 11 gelagert. Der zweite Rotationskörper 10 ist ebenfalls über Kugellager 29 drehbar in einem starr mit der Basis 5 verbundenen Gehäuse 30 gelagert.

Die Verformungseinrichtung 12 ist starr mit dem zweiten Rotationskörper 10 verbunden. Das aus dem zweiten Kanalabschnitt 9 austretende Filament 4 wird durch zwei in einem vorgebbaren Abstand zueinander festlegbare Walzen 31 hindurchbefördert und dabei verformt. Dabei wird das zunächst noch rotationssymmetrische Filament 4 mit einer kreisrunden Querschnittsfläche in ein Filament 4 mit einer näherungsweise rechteckigen Querschnittsfläche verformt, die für viele Verwendungszwecke des Schraubenwendels 2 vorteilhaft ist.

Das verformte Filament 4 wird nach dem Austritt aus der Austrittsöffnung 16 durch die Rotationsbewegung des rotierenden zweiten Rotationskörpers 10 und der daran festgelegten Verformungseinrichtung 12 kontinuierlich um den Wickeldorn 13 gewunden, sodass immer neue Windungen des Filaments 4 auf den Wickeldorn 13 aufgewickelt werden und jeweils eine neue Windung die bereits aufgewickelten vorausgegangenen Windungen verdrängt. Dadurch wird der derart hergestellte Schraubenwendel 2 in der Filamentförderrichtung kontinuierlich über den Wickeldorn 13 geschoben und schließlich nach dem Ende des Wickeldorns 13 von dem Wickeldorn 13 heruntergeschoben.

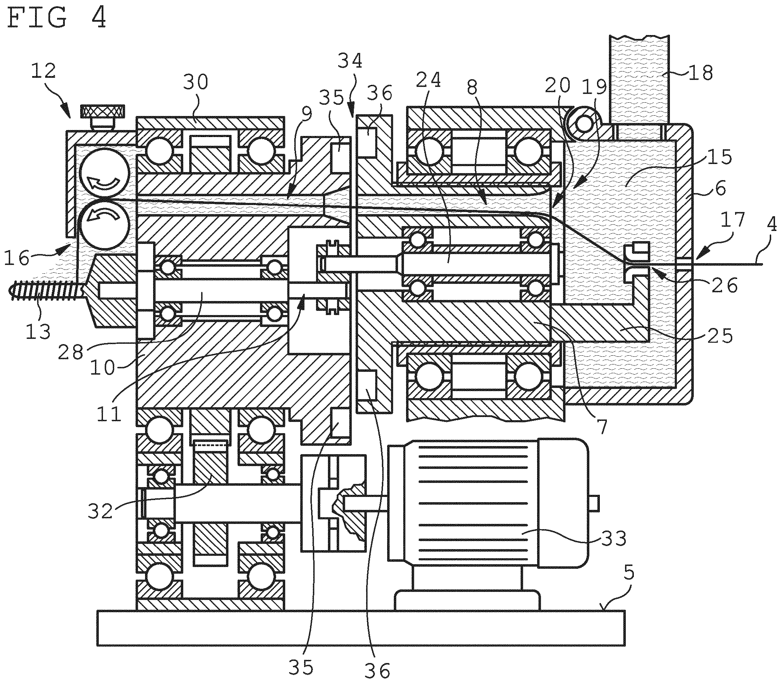

In Figur 4 ist eine schematische Schnittansicht der erfindungsgemäßen Vorrichtung 1 dargestellt. Der zweite Rotationskörper 10 wird über einen Zahnradantrieb 32 von einem Elektromotor 33 angetrieben und in Rotationsbewegung versetzt. Der zweite Rotationskörper 10 ist innerhalb des Gehäuses 30 drehbar auf der zweiten Welle 28 des Kernelements 11 gelagert. Der erste Rotationskörper 7 ist ebenfalls drehbar auf der ersten Welle 24 des Kernelements 11 gelagert. Die erste Welle 24 und die zweite Welle 28 des Kernelements 11 weisen einen seitlichen Versatz relativ zueinander auf. Dieser in Figur 4 zur Veranschaulichung sehr groß dargestellte seitliche Versatz kann in der Praxis einige Millimeter oder weniger betragen und dient dazu, eine Drehbewegung des deshalb nicht rotationssymmetrischen Kernelements 11 innerhalb der rotierenden Rotationskörper 7, 10 zu verhindern.

Zwischen dem ersten Rotationskörper 7 und dem zweiten Rotationskörper 10 ist ein Spalt 34 mit einer geringen Spaltbreite von weniger als 1 mm ausgebildet. Sowohl der erste Rotationskörper 7 als auch der zweite Rotationskörper 10 weisen jeweils an einer dem Spalt zugewandten Stirnfläche Magnetelemente 35, 36 auf. Die einander zugewandten Magnetelemente 35, 36 bewirken eine Magnetkopplung des nicht gesondert angetriebenen ersten Rotationskörpers 7 an den von dem Elektromotor 33 angetrieben zweiten Rotationskörper 10 und führen dazu, dass der erste Rotationskörper 7 von dem zweiten Rotationskörper 10 mitgezogen und in eine gleichlaufende Rotationsbewegung versetzt wird.

## Patentansprüche

1. Verfahren zum Herstellen von Schraubenwendeln (2), insbesondere für Wendelsiebe, wobei ein Filament (4) in einer Filamentförderrichtung durch einen ersten Kanalabschnitt (8) eines ersten Rotationskörpers (7) gefördert wird, wobei der erste Rotationskörper (7) um einen ersten Abschnitt eines drehfest gelagerten Kernelements (11) rotiert, wobei das Filament (4) in der Filamentförderrichtung nachfolgend durch einen zweiten Kanalabschnitt (9) eines zweiten Rotationskörpers (10) gefördert wird, der um einen dem ersten Abschnitt nachfolgenden zweiten Abschnitt des Kernelements (11) gleichlaufend mit dem ersten Rotationskörper (7) rotiert, und wobei das Filament (4) anschließend um einen über den zweiten Kanalabschnitt (9) in der Filamentförderrichtung aus dem Kernelement (11) herausragenden Wickeldorn (13) gewunden wird, sodass durch einen kontinuierlichen Vorschub der um den Wickeldorn (13) gewundenen Windungen des Filaments (4) ein Schraubenwendel (2) aus dem Filament (4) hergestellt wird, **dadurch gekennzeichnet, dass** ein erwärmtes Heizfluid (15) mit Überdruck durch den ersten Kanalabschnitt (8) sowie den nachfolgend angeordneten zweiten Kanalabschnitt (9) strömt und dabei das durch den ersten Kanalabschnitt (8) und anschließend durch den zweiten Kanalabschnitt (9) geförderte Filament (4) erwärmt.

2. Verfahren nach Anspruch 1, **dadurch gekennzeichnet, dass** das aus dem zweiten Kanalabschnitt (9) austretende Filament (4) vor dem Umwickeln auf den Wickeldorn (13) mit einer Verformungseinrichtung (12) verformt wird.

3. Verfahren nach Anspruch 2, **dadurch gekennzeichnet, dass** das Filament (4) mit einer rotationssymmetrischen Querschnittsfläche dem ersten Kanalabschnitt (8) zugeführt wird, und dass das Filament (4) in der Verformungseinrichtung (12) zu einer nicht rotationssymmetrischen Querschnittsfläche verformt wird.

4. Verfahren nach einem der vorangehenden Ansprüche, **dadurch gekennzeichnet, dass** das Filament (4) vor dem ersten Kanalabschnitt (8) durch eine drehfest angeordnete Zuführungskammer (6) gefördert und dem ersten Kanalabschnitt (8) zugeführt wird, und dass ebenfalls das erwärmte Heizfluid (15) über die Zuführungskammer (6) dem ersten Kanalabschnitt (8) zugeführt wird.

5. Verfahren nach einem der vorangehenden Ansprüche 2 bis 4, **dadurch gekennzeichnet, dass** das erwärmte Heizfluid (15) nach dem Ausströmen aus dem zweiten Kanalabschnitt (9) durch die Verformungseinrichtung (12) hindurchströmt.

6. Verfahren nach einem der vorangehenden Ansprüche, **dadurch gekennzeichnet, dass** das aus dem zweiten Kanalabschnitt (9) ausströmende erwärmte Heizfluid (15) auf den Wickeldorn (13) gerichtet wird.

7. Vorrichtung (1) zum Herstellen von Schraubenwendeln, insbesondere für Wendelsiebe, mit einem drehfest gelagerten Kernelement (11), mit einem ersten Rotationskörper (7), der um einen sich in einer Filamentförderrichtung entlang des Kernelements (11) erstreckenden ersten Abschnitt des Kernelements (11) rotierend gelagert ist, und mit einem zweiten Rotationskörper (10), der um einen sich in der Filamentförderrichtung entlang des Kernelements (11) erstreckenden und dem ersten Abschnitt nachfolgenden zweiten Abschnitt des Kernelements (11) rotierend gelagert ist, und mit einem nach dem zweiten Abschnitt in der Filamentförderrichtung aus dem Kernelement (11) herausragenden Wickeldorn (13), wobei ein Filament (4) in der Filamentförderrichtung durch einen ersten Kanalabschnitt (8) in dem rotierenden ersten Rotationskörper (7) und nachfolgend durch einen zweiten Kanalabschnitt (9) in dem gleichlaufend rotierenden zweiten Rotationskörper (10) hindurchgeführt und anschließend um den Wickeldorn (13) gewunden werden kann, sodass durch einen kontinuierlichen Vorschub der um den Wickeldorn (13) gewundenen Windungen des Filaments (4) ein Schraubenwendel (2) aus dem Filament (4) hergestellt werden kann, **dadurch gekennzeichnet, dass** in der Filamentförderrichtung vor dem ersten Rotationskörper (7) eine drehfest gelagerte Zuführungskammer (6) angeordnet ist, durch welche das von einem Vorrat zugeführte Filament (4) in den ersten Kanalabschnitt (8) eingeführt werden kann, wobei die Zuführungskammer (6) mit einem Heizfluidvorrat verbunden ist, sodass ein erwärmtes Heizfluid (15) mit Überdruck der Zuführungskammer (6) zugeführt werden und anschließend durch den ersten Kanalabschnitt (8) sowie den nachfolgend angeordneten zweiten Kanalabschnitt (9) strömen kann.

8. Vorrichtung (1) nach Anspruch 7, dass in der Filamentförderrichtung im Anschluss an einen Ausgang des zweiten Kanalabschnitts (9) eine Verformungseinrichtung (12) an dem zweiten Rotationskörper (10) angeordnet ist, mit welcher das an dem Ausgang des zweiten Kanalabschnitts (9) austretende und erwärmte Filament (4) vor dem Umwinden auf den Wickeldorn (13) verformt werden kann.

9. Vorrichtung (1) nach Anspruch 8, **dadurch gekennzeichnet, dass** die Verformungseinrichtung (12) eine dem Ausgang des zweiten Kanalabschnitts (9) zugewandte Einströmungsöffnung für das erwärmte Heizfluid (15) aufweist, und dass die Verformungseinrichtung (12) eine Ausströmungsöffnung (16) für das erwärmte Heizfluid (15) aufweist.

10. Vorrichtung (1) nach Anspruch 8 oder Anspruch 9, **dadurch gekennzeichnet, dass** die Ausströmungsöffnung (16) der Verformungseinrichtung (12) auf den Wickeldorn (13) gerichtet ist.

11. Vorrichtung (1) nach einem der Ansprüche 7 bis 10, **dadurch gekennzeichnet, dass** das Kernelement (11) in dem ersten Abschnitt eine erste Welle (24) aufweist, um welche der erste Rotationskörper (7) rotierend gelagert ist, dass das Kernelement (11) in dem zweiten Abschnitt eine zweite Welle (28) aufweist, um welche der zweite Rotationskörper (10) rotierend gelagert ist, und dass die erste Welle (24) über eine Verbindungseinrichtung mit der zweiten Welle (28) so verbunden ist, dass eine Mittenachse der ersten Welle (24) einen seitlichen Versatz relativ zu einer Mittenachse der zweiten Welle (28) aufweist.

12. Vorrichtung (1) nach einem der Ansprüche 7 bis 11, **dadurch gekennzeichnet, dass** ein Abstand eines Ausgangs des ersten Kanalabschnitts (8) des ersten Rotationskörpers (7) zu einem Eingang des zweiten Kanalabschnitts (9) des zweiten Rotationskörpers (10) weniger als 1 mm, vorzugsweise weniger als 0,5 mm und besonders vorzugsweise weniger als 0,2 mm beträgt.

13. Vorrichtung (1) nach einem der Ansprüche 7 bis 12, **dadurch gekennzeichnet, dass** der rotierend gelagerte erste Rotationskörper (7) und der rotierend gelagerte zweite Rotationskörper (10) über eine Magnetkopplung berührungsfrei miteinander gekoppelt sind.

## Claims

1. Method for producing helical coils (2), in particular for helical screens, wherein a filament (4) is conveyed in a filament conveying direction through a first channel portion (8) of a first rotational body (7), wherein the first rotational body (7) rotates about a first portion of a core element (11) mounted in a rotationally fixed manner, wherein the filament (4) is subsequently conveyed in the filament conveying direction through a second channel portion (9) of a second rotational body (10) which rotates about a second portion of the core element (11) following the first portion in synchronisation with the first rotational body (7), and wherein the filament (4) is subsequently wound around a winding mandrel (13) projecting from the core element (11) over the second channel portion (9) in the filament conveying direction, so that a helical coil (2) is produced from the filament (4) by continuously feeding the windings of the filament (4) wound around the winding mandrel (13), **characterised in that** a heated heating fluid (15) flows with a positive pressure through the first channel portion (8) as well as the second channel portion (9) arranged downstream and thus heats the filament (4) conveyed through the first channel portion (8) and subsequently through the second channel portion (9).

2. Method according to claim 1, **characterised in that** the filament (4) exiting the second channel portion (9) is deformed by a deforming device (12) before being wound onto the winding mandrel (13).

3. Method according to claim 2, **characterised in that** the filament (4) is supplied to the first channel portion (8) with a rotationally symmetrical cross-sectional area, and **in that** the filament (4) is deformed in the deforming device (12) into a cross-sectional area which is not rotationally symmetrical.

4. Method according to any one of the preceding claims, **characterised in that** the filament (4) is conveyed before the first channel portion (8) through a supply chamber (6) arranged in a rotationally fixed manner and is supplied to the first channel portion (8), and **in that** the heated heating fluid (15) is also supplied to the first channel portion (8) via the supply chamber (6).

5. Method according to any one of the preceding claims 2 to 4, **characterised in that** the heated heating fluid (15) flows through the deforming device (12) after flowing out of the second channel portion (9).

6. Method according to any one of the preceding claims, **characterised in that** the heated heating fluid (15) flowing out of the second channel portion (9) is directed to the winding mandrel (13).

7. Device (1) for producing helical coils, in particular for helical screens, having a core element (11) mounted in a rotationally fixed manner, having a first rotational body (7) which is mounted so as to be rotatable about a first portion of the core element (11) extending in a filament conveying direction along the core element (11), and having a second rotational body (10) which is mounted so as to be rotatable about a second portion of the core element (11) extending in the filament conveying direction along the core element (11) and following the first portion, and having a winding mandrel (13) projecting from the core element (11) after the second portion in the filament conveying direction, wherein a filament (4) can be passed in the filament conveying direction through a first channel portion (8) in the rotating first rotational body (7) and subsequently through a second channel portion (9) in the second rotational body (10) rotating in a synchronous manner and subsequently wound around the winding mandrel (13), so that a helical coil (2) can be produced from the filament (4) by continuously feeding the windings of the filament (4) wound around the winding mandrel (13), **characterised in that** a supply chamber (6) mounted in a rotationally fixed manner is arranged in the filament conveying direction ahead of the first rotational body (7), through which chamber the filament (4) supplied from a supply can be introduced into the first channel portion (8), wherein the supply chamber (6) is connected to a heating fluid supply, so that a heated heating fluid (15) can be supplied to the supply chamber (6) with a positive pressure and can subsequently flow through the first channel portion (8) and the second channel portion (9) arranged downstream.

8. Device (1) according to claim 7, **characterised in that** in the filament conveying direction after an outlet of the second channel portion (9), a deforming device (12) is arranged on the second rotational body (10), with which device the filament (4) exiting at the outlet of the second channel portion (9) and heated can be deformed before being wound onto the winding mandrel (13).

9. Device (1) according to claim 8, **characterised in that** the deforming device (12) comprises an inflow opening for the heated heating fluid (15), which faces the outlet of the second channel portion (9), and **in that** the deforming device (12) comprises an outflow opening (16) for the heated heating fluid (15).

10. Device (1) according to claim 8 or claim 9, **characterised in that** the outflow opening (16) of the deforming device (12) is directed to the winding mandrel (13).

11. Device (1) according to any one of claims 7 to 10, **characterised in that** the core element (11) comprises, in the first portion, a first shaft (24) about which the first rotational body (7) is rotatably mounted, **in that** the core element (11) comprises, in the second portion, a second shaft (28) about which the second rotational body (10) is rotatably mounted, and **in that** the first shaft (24) is connected to the second shaft (28) via a connecting device in such a way that a centre axis of the first shaft (24) is laterally offset with respect to a centre axis of the second shaft (28).

12. Device (1) according to any one of claims 7 to 11, **characterised in that** a distance of an outlet of the first channel portion (8) of the first rotational body (7) to an inlet of the second channel portion (9) of the second rotational body (10) is less than 1 mm, preferably less than 0.5 mm and particularly preferably less than 0.2 mm.

13. Device (1) according to any one of claims 7 to 12, **characterised in that** the rotatably mounted first rotational body (7) and the rotatably mounted second rotational body (10) are coupled to each other in a non-contacting manner via a magnetic coupling.

## Revendications

1. Procédé de fabrication de bobines hélicoïdales (2), notamment pour des tamis hélicoïdaux, un filament (4) étant transporté dans une direction de transport de filament à travers une première section de canal (8) d'un premier corps de rotation (7), le premier corps de rotation (7) tournant autour d'une première section d'un élément de noyau (11) monté de manière fixe en rotation, le filament (4) étant ensuite transporté dans la direction de transport de filament à travers une deuxième section de canal (9) d'un deuxième corps de rotation (10) qui tourne autour d'une deuxième section de l'élément de noyau (11) à la suite de la première section, en synchronisation avec le premier corps de rotation (7), et le filament (4) étant ensuite enroulé autour d'un mandrin d'enroulement (13) dépassant de l'élément de noyau (11) au-dessus de la deuxième section de canal (9) dans la direction de transport de filament, de telle sorte qu'une bobine hélicoïdale (2) est produite à partir du filament (4) par une avance continue des spires du filament (4) enroulées autour du mandrin d'enroulement (13), **caractérisé en ce qu'**un fluide de chauffage chauffé (15) s'écoule avec une surpression à travers la première section de canal (8) ainsi que la deuxième section de canal (9) agencée à la suite et chauffe ainsi le filament (4) transporté à travers la première section de canal (8) et ensuite à travers la deuxième section de canal (9).

2. Procédé selon la revendication 1, **caractérisé en ce que** le filament (4) sortant de la deuxième section de canal (9) est déformé par un dispositif de déformation (12) avant d'être enroulé sur le mandrin d'enroulement (13).

3. Procédé selon la revendication 2, **caractérisé en ce que** le filament (4) est amené à la première section de canal (8) avec une surface de section transversale à symétrie de rotation, et **en ce que** le filament (4) est déformé dans le dispositif de déformation (12) en une surface de section transversale sans symétrie de rotation.

4. Procédé selon l'une quelconque des revendications précédentes, **caractérisé en ce que** le filament (4) est transporté avant la première section de canal (8) à travers une chambre d'amenée (6) agencée de manière fixe en rotation et est amené à première section de canal (8), et **en ce que** le fluide de chauffage chauffé (15) est également amené à la première section de canal (8) par le biais de la chambre d'amenée (6).

5. Procédé selon l'une quelconque des revendications 2 à 4 précédentes, **caractérisé en ce que** le fluide de chauffage chauffé (15) s'écoule à travers le dispositif de déformation (12) après être sorti de la deuxième section de canal (9).

6. Procédé selon l'une quelconque des revendications précédentes, **caractérisé en ce que** le fluide de chauffage chauffé (15) sortant de la deuxième section de canal (9) est dirigé vers le mandrin d'enroulement (13).

7. Dispositif (1) pour la fabrication de bobines hélicoïdales, notamment pour des tamis hélicoïdaux, avec un élément de noyau (11) monté de manière fixe en rotation, avec un premier corps de rotation (7) qui est monté de manière rotative autour d'une première section de l'élément de noyau (11) s'étendant dans une direction de transport de filament le long de l'élément de noyau (11), et avec un deuxième corps de rotation (10) qui est monté de manière rotative autour d'une deuxième section de l'élément de noyau (11) s'étendant dans la direction de transport de filament le long de l'élément de noyau (11) et à la suite de la première section, et avec un mandrin d'enroulement (13) dépassant de l'élément de noyau (11) après la deuxième section dans la direction de transport de filament, un filament (4) pouvant être passé dans la direction de transport de filament à travers une première section de canal (8) dans le premier corps de rotation (7) tournant et ensuite à travers une deuxième section de canal (9) dans le deuxième corps de rotation (10) tournant de manière synchrone et ensuite enroulé autour du mandrin d'enroulement (13), de telle sorte qu'une bobine hélicoïdale (2) peut être produite à partir du filament (4) par une avance continue des spires du filament (4) enroulées autour du mandrin d'enroulement (13), **caractérisé en ce qu'**une chambre d'amenée (6) montée de manière fixe en rotation est agencée dans la direction de transport de filament avant le premier corps de rotation (7), par laquelle le filament (4) amené par une réserve peut être introduit dans la première section de canal (8), la chambre d'amenée (6) étant reliée à une réserve de fluide de chauffage, de telle sorte qu'un fluide de chauffage chauffé (15) peut être amené avec une surpression à la chambre d'amenée (6) et s'écouler ensuite à travers la première section de canal (8) et la deuxième section de canal (9) agencée à la suite.

8. Dispositif (1) selon la revendication 7, **caractérisé en ce que**, dans la direction de transport de filament, après une sortie de la deuxième section de canal (9), un dispositif de déformation (12) est agencé sur le deuxième corps de rotation (10), avec lequel le filament (4) sortant de la sortie de la deuxième section de canal (9) et chauffé peut être déformé avant d'être enroulé sur le mandrin d'enroulement (13).

9. Dispositif (1) selon la revendication 8, **caractérisé en ce que** le dispositif de déformation (12) présente une ouverture d'entrée pour le fluide de chauffage chauffé (15), tournée vers la sortie de la deuxième section de canal (9), et **en ce que** le dispositif de déformation (12) présente une ouverture de sortie (16) pour le fluide de chauffage chauffé (15) .

10. Dispositif (1) selon la revendication 8 ou la revendication 9, **caractérisé en ce que** l'ouverture de sortie (16) du dispositif de déformation (12) est dirigée vers le mandrin d'enroulement (13).

11. Dispositif (1) selon l'une quelconque des revendications 7 à 10, **caractérisé en ce que** l'élément de noyau (11) présente, dans la première section, un premier arbre (24) autour duquel le premier corps de rotation (7) est monté de manière rotative, **en ce que** l'élément de noyau (11) présente, dans la deuxième section, un deuxième arbre (28), autour duquel le deuxième corps de rotation (10) est monté de manière rotative, et **en ce que** le premier arbre (24) est relié au deuxième arbre (28) par le biais d'un dispositif de liaison de telle sorte qu'un axe central du premier arbre (24) présente un décalage latéral par rapport à un axe central du deuxième arbre (28).

12. Dispositif (1) selon l'une quelconque des revendications 7 à 11, **caractérisé en ce qu'**une distance entre une sortie de la première section de canal (8) du premier corps de rotation (7) et une entrée de la deuxième section de canal (9) du deuxième corps de rotation (10) est inférieure à 1 mm, de préférence inférieure à 0,5 mm et de manière particulièrement préférée inférieure à 0,2 mm.

13. Dispositif (1) selon l'une quelconque des revendications 7 à 12, **caractérisé en ce que** le premier corps de rotation (7) monté de manière rotative et le deuxième corps de rotation (10) monté de manière rotative sont couplés l'un à l'autre sans contact par le biais d'un couplage magnétique.
